**Europäisches Patentamt**

**European Patent Office**

**Office européen des brevets**

(19)

(11) Veröffentlichungsnummer : **0 022 453
B1**

(12)     **EUROPÄISCHE PATENTSCHRIFT**

(45) Veröffentlichungstag der Patentschrift :
26.01.83

(51) Int. Cl.³ : **H 04 H   3/00, H 04 B   7/26**

(21) Anmeldenummer : **80102325.0**

(22) Anmeldetag : **30.04.80**

(54) **Verfahren zur Vermeidung von Interferenzstörungen bei der Funkübertragung zu einem mobilen Sende-/Empfangsgerät im Funkfeld zweier synchroner oder quasi-synchroner Gleichwellensender und Anordnung zur Durchführung des Verfahrens.**

(30) Priorität : 14.07.79 DE 2928514

(43) Veröffentlichungstag der Anmeldung :
21.01.81 Patentblatt 81/03

(45) Bekanntmachung des Hinweises auf die Patenterteilung : 26.01.83 Patentblatt 83/04

(84) Benannte Vertragsstaaten :
AT FR GB LU NL

(56) Entgegenhaltungen :
DE A 2 612 476
DE A 2 645 901
DE B 1 230 471
DE C 462 905
FR A 894 307
GB A 1 071 171
US A 1 881 483
US A 3 745 464

(73) Patentinhaber : **Licentia Patent-Verwaltungs-GmbH
Theodor-Stern-Kai 1
D-6000 Frankfurt/Main 70 (DE)**

(72) Erfinder : **Nedtwig, Joachim, Dipl.-Ing.
Donauhalde 22
D-7900 Ulm (DE)**

(74) Vertreter : **Schickle, Gerhard, Dipl.-Ing. et al
Licentia Patent-Verwaltungs-GmbH Theo-
dor-Stern-Kai 1
D-6000 Frankfurt/Main 70 (DE)**

# Verfahren zur Vermeidung von Interferenzstörungen bei der Funkübertragung zu einem mobilen Sende-/Empfangsgerät im Funkfeld zweier synchroner oder quasi-synchroner Gleichwellensender und Anordnung zur Durchführung des Verfahrens

Die Erfindung betrifft ein Verfahren nach dem Oberbegriff des Anspruchs 1.

Im Funkfeld je zweier synchroner oder quasisynchroner Gleichwellensender S1 und S2 kann es zur Ausbildung starker Feldstärke-Extrema durch Zwei-Wellen-Interferenzen kommen. Die Feldstärkeminima im Abstand von $\lambda/2$, wobei $\lambda$ die Trägerwellenlänge ist, erzeugen beim mobilen Empfangsgerät Signalverzerrungen und Störimpulse, vgl. z.B. die DE-OS 26 45 901.

Gegenüber einem stehenden Beobachter laufen die Extrema durch mit einer Relativ-Geschwindigkeit des Feldes $V_F = \pm \Delta F \cdot \lambda/2$, wobei $\Delta F$ die Differenz (Versatz) der Trägerfrequenzen ist. Bei $\lambda = 4$ m und $\Delta F = + 10$ Hz bedeutet das z.B. $V_F = + 72$ km/h.

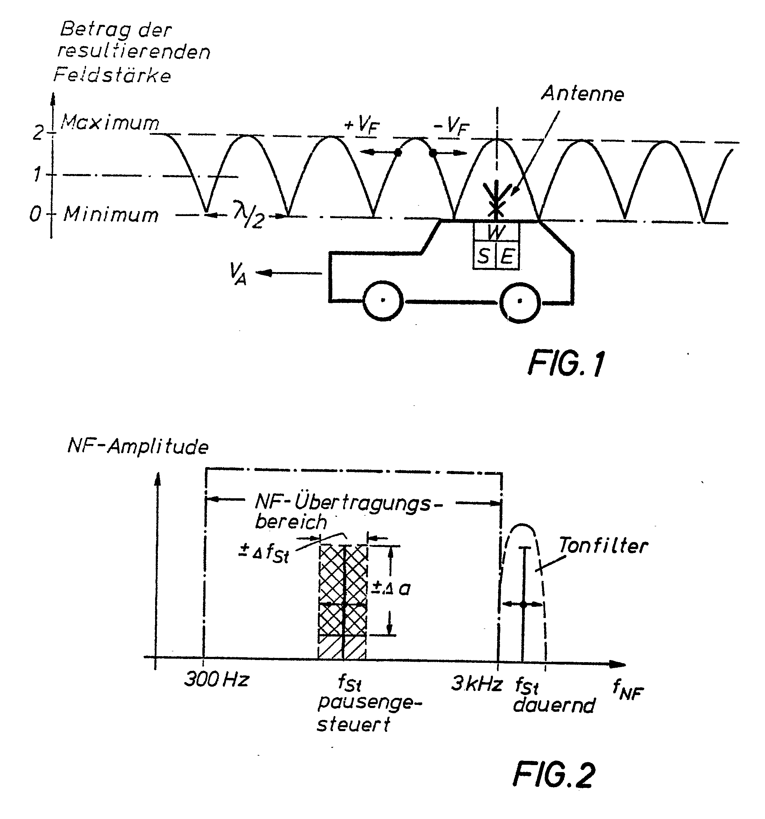

Fig. 1 zeigt anschaulich ein mobiles Sende-Empfangsgerät mit einer Geschwindigkeit $V_A$ im Zwei-Wellen-Interferenzfeld.

Aus der US-PS 1 881 483 ist ein Gleichwellenrundfunksystem bekannt, bei welchem in der Interferenzzone zwischen zwei Sendern ein Hilfsempfänger fest installiert ist. Dieser meldet die empfangenen Feldstärkewerte an einen der Sender zurück, wo die Trägerfrequenz nachgeregelt wird, um die Interferenzzone zu stabilisieren.

Aus der DE-AS 12 30 471 ist ein System bekannt mit Gleichwellensendern entlang einer Straße. Zwischen den Sendern sind Hilfsempfänger fest installiert, die die Sendungen je zweier benachbarter Sender empfangen und einen der beiden Sender so nachregeln, daß ein vorbestimmter Abstand der Träger eingehalten wird.

Aus der DE-PS 462 905 ist ein Gleichwellensendersystem bekannt, bei dem Interferenzstörungen durch eine zusätzliche periodische Modulation eines oder mehrerer Sender gemindert oder beseitigt werden.

Aus der FR-PS 894 307 und der US-PS 3 745 464 sind Systeme bekannt zur Verbesserung des Funkverkehrs zwischen zwei Sende-Empfänger n. Der Empfänger sendet Steuersignale in Abhängigkeit von seinem Empfangssignal an den Sender. Dieser wird nun in der Sendeleistung derart geregelt, daß die Empfangsleistung am Empfänger gleich bleibt.

Aus der GB-PS 1 071 171 ist ein Funksystem bekannt, bei dem die Koordinaten einer Mobilstation in bezug auf mehrere Funksender ermittelt werden und die Sender dann derart gerichtet aussenden, daß sich die einzelnen Funkfelder am Ort der Mobilstation zu einer Singularität überlagern.

Aus der DE-OS 26 12 476 ist ein Sprechfunksystem mit Empfängerauswahlautomatik bekannt. Dabei sendet eine Mobilstation einen analogen oder digitalen Meßton außerhalb des Nutzfrequenzbereichs aus, vorzugsweise in Gesprächspausen oder zu Beginn einer Verbindung.

Aufgabe der Erfindung ist es, die Störungen im mobilen Empfangsgerät, die durch die Interferenzminima (Trägersubtraktion) entstehen, zu vermeiden und im Gegenteil die Interferenzen positiv auszunutzen (Trägeraddition).

Das erfindungsgemäße Verfahren ist im Anspruch 1 beschrieben. Eine vorteilhafte Anordnung zur Durchführung des erfindungsgemäßen Verfahrens ist im Anspruch 7 beschrieben.

Durch die Erfindung wird interferenzfreier Funkempfang ohne Signalverzerrungen gewährleistet. Außerdem wird die Addition der Feldstärke im Interferenzmaximum ausgenutzt. Die Erreichbarkeit mobiler Teilnehmer ohne Vergrößerung der Sendeleistung ortsfester Sender wird wesentlich erhöht.

Vorausgesetzt wird, daß in einkanaligen Gleichwellen-Funknetzen zum gleichen Zeitpunkt immer nur ein mobiles Sende-/Empfangsgerät mit einer Leitstelle verkehrt. Ausgenommen ist der Fall, daß zwei Fahrzeuge miteinander im WzW-Verkehr (Wagen-zu-Wagen) korrespondieren, wenn ein Fahrzeug die Funkverbindung eröffnet.

Das mobile Sende-/Empfangsgerät sendet Steuersignale aus zur Steuerung der automatischen Nachführung des Feldstärkemaximums, da das mobile Sende-/Empfangsgerät selbst am besten die notwendige Größe und Richtung der Nachführung ermitteln kann. Diese Steuersignale können dauernd außerhalb des Nutzfrequenzbereichs oder pausengesteuert zu Beginn eines Gesprächs oder in natürlichen Gesprächspausen, vorzugsweise im NF-Kanal, ausgesendet werden. Beide Möglichkeiten sind in Fig. 2 in ein NF-Frequenzschema eingezeichnet. In dieser Figur bedeutet $f_{St}$ = Frequenz der Steuersignale.

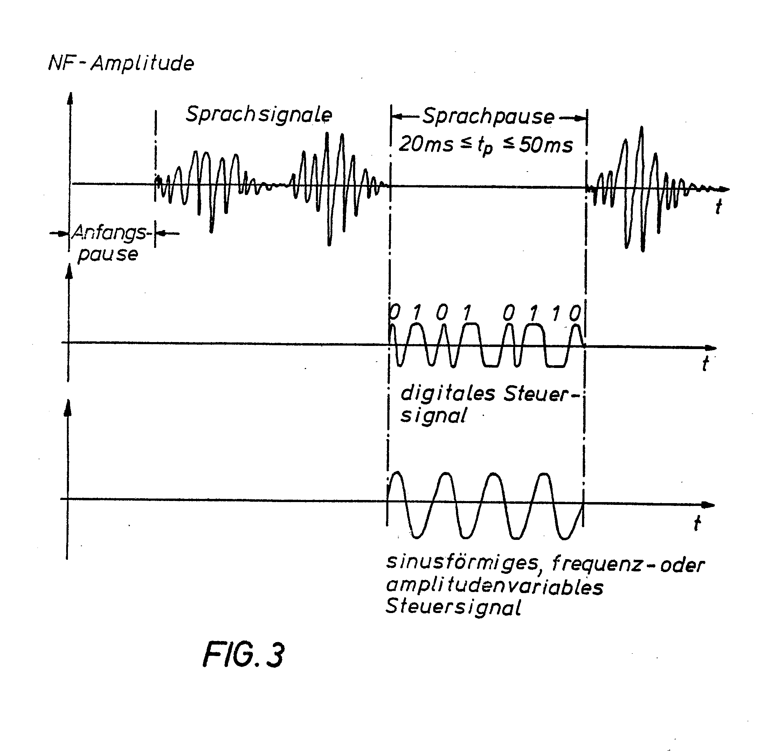

Die Steuersignale können digital codiert oder analog moduliert werden. Fig. 3 stellt diese beiden Möglichkeiten bei pausengesteuerter Aussendung dar.

Mit den Steuersignalen wird in den Gleichwellensendern die Differenz der Trägerfrequenzen nach Betrag und Vorzeichengesteuert. Damit entsteht eine Regelschleife zwischen mobilem Gerät und Gleichwellensender.

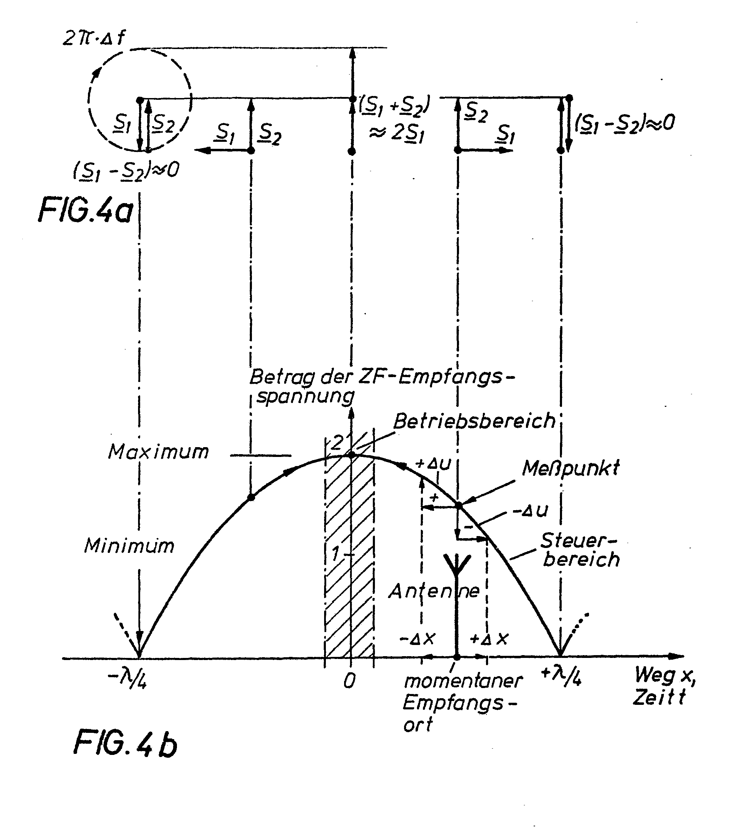

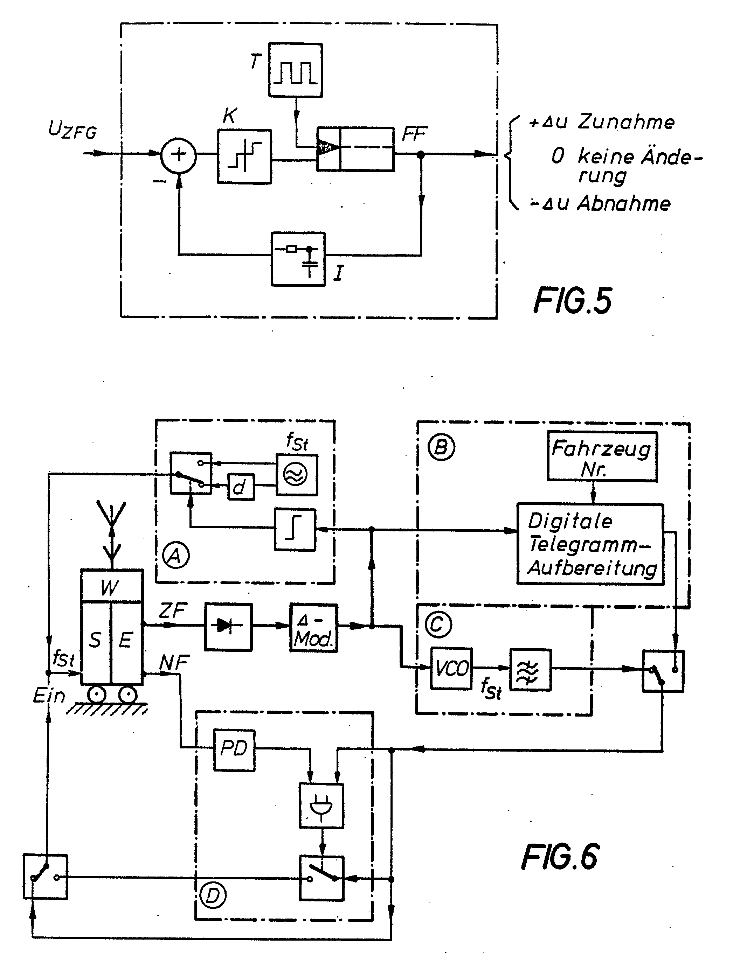

Eine vorteilhafte Anordnung zur Durchführung des erfindungsgemäßen Verfahrens wird im folgenden beschrieben. Das mobile Sende-/Empfangsgerät besitzt ein Delta-Modulator-IC zur Abtastung des Feldstärkemaximums gemäß Fig. 4b. Die zum Feldstärkeverlauf zugehörigen komplexen Trägerempfangsspannungen $S_1$, $S_2$, der Sender 1 und 2, sind in Fig. 4a dargestellt. Wenn sich das mobile Sende-/Empfangsgerät, bzw. das Funkfeld bewegt, so gibt der Delta-Modulator eine Spannung $+ \Delta U$ oder $-\Delta U$ ab, je nachdem, ob die gleichgerichtete ZF-Empfangsspannung $U_{ZFG}$ zunimmt oder abnimmt. Fig. 5 zeigt ein Blockschaltbild eines Delta-Modulator IC mit Komparator K, Taktgenerator T, taktgesteuertem Flip-Flop FF und Integrierer I.

Fig. 6 zeigt verschiedene Varianten einer Gesamtanordnung im mobilen Sende-/Empfangsgerät mit Delta-Modulator und Mitteln zur Erzeugung der Steuersignale. Dabei bedeuten S = Sender, E = Empfänger, W = Weiche, Δ-MOD = Delta-Modulator, d = Dämpfungsglied, $f_{St}$ = Steuerfrequenz, NF = Niederfrequenz, ZF = Zwischenfrequenz, EIN = NF-Eingang des Senders, PD = Pausendetektor, VCO = spannungsgesteuerter Oszillator.

Variante A arbeitet mit Amplitudentastung eines NF-Steuersignals. Die Kombination B + D arbeitet mit digitalem Steuersignal in Sprachpausen. Variante C sendet ein analoges Steuersignal außerhalb des NF-Nutzbandes. Kombination C + D schließlich sendet ein analoges Steuersignal in Sprachpausen.

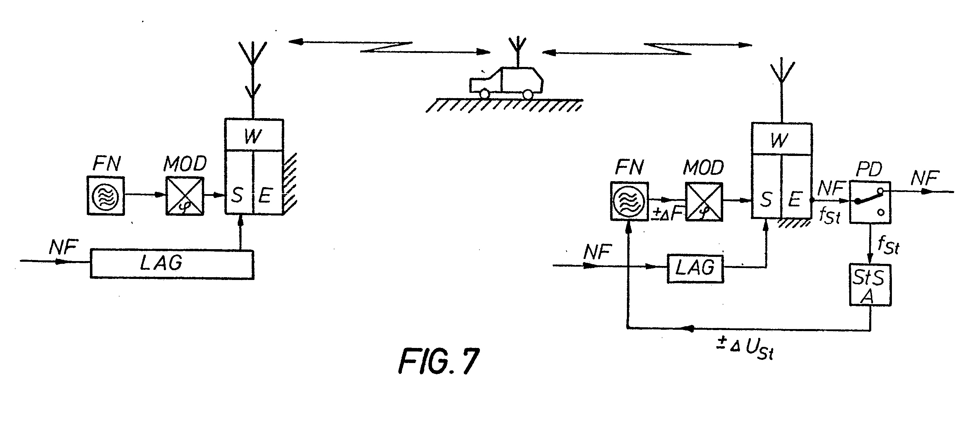

Fig. 7 zeigt ein Schema zweier synchroner oder quasisynchroner Gleichwellensender. Der eine Sender ist normal ausgestattet. Der andere verfügt über einen Steuersignalauswerter StSA. Dieser gibt eine Spannung ± ΔU$_{St}$ an das Frequenznormal FN (hochstabiler Trägerfrequenzoszillator), welches eine um ± ΔF geänderte Frequenz erzeugt. Durch die somit geänderte Trägerfrequenzdifferenz der beiden Gleichwellensender wird das Feldstärkemaximum auf die Antenne des mobilen Sende-/Empfangsgerätes nachgeführt. Es bedeuten weiter in Fig. 7 : LAG = Laufzeitausgleich, MOD = Modulator.

Nimmt man an, daß sich das mobile Sende-/Empfangsgerät mit maximal 200 km/h bewegt, so muß die Differenz der Trägerfrequenzen bei λ = 4 m den Wert ΔF = 27,8 Hz haben. Dies ist ein Wert, der für andere mobile Sende-/Empfangsgeräte, die im Gleichwellenfunkkanal mithören wollen, keine unzulässigen neuen Störungen verursacht.

Das Verfahren ist jedoch auch vorteilhaft im Funkfeld von Einzelsendern zur Verbesserung des Funkempfangs einsetzbar. In einem solchen Funkfeld kann es zu stehenden Funklöchern kommen, durch Reflexionen an Hindernissen wie Häusern, Bäumen etc. Durch die Steuersignale, die das mobile Sende-/Empfangsgerät aussendet, wird die Trägerphase des Einzelsenders geändert, und so das Funkloch weggeschoben von der Empfangsantenne des mobilen Sende-/Empfangsgerätes.

Mit der fahrzeuggesteuerten Nachführung des Feldstärkemaximums sind außer den eingangs genannten weitere Vorteile verbunden :

— Die Möglichkeit eines hochgenauen, fahrzeuggesteuerten automatischen Laufzeitausgleichs der NF-Signale in der Leitstelle auf den jeweiligen Empfangsort,

— die Möglichkeit der automatischen Messung des echten Signal-/Störabstandes innerhalb des NF-Nutzkanals, mit dem Steuersignal als Meßton (vgl. DE-PS 26 12 476),

— die Möglichkeit der automatischen Ortsbestimmung eines Fahrzeugs über den Laufzeitausgleich in einer Leitstelle,

— die Möglichkeit der automatischen Feststellung der Fahrzeuggeschwindigkeit in einer Leitstelle über den Laufzeitausgleich und die Trägerfrequenzdifferenz,

— die Kompatibilität, d.h. die Verträglichkeit im Funkbetrieb mit anderen Fahrzeugen ist in Gleichwellenfunknetzen gewahrt.

— In Gleichwellenfunknetzen mit mehr als zwei Sendern funktioniert das vorgeschlagene Verfahren durch Probieren. Damit sind die Vorteile nicht nur auf zwei Sender begrenzt.

— Das Verfahren ist universell einsetzbar, auch für Einzelsender, deren Feldstärke am Empfangsort durch einen Reflektor, äquivalent zu einem zweiten Gleichwellenstrahler, orts- und zeitselektiv durch Interferenz ausgelöscht wird.

## Ansprüche

1. Verfahren zur Vermeidung von Interferenzstörungen bei der Funkübertragung zu einem mobilen Sende-/Empfangsgerät im Funkfeld je zweier synchroner oder quasisynchroner Gleichwellensender mit Zwei-Wellen-Interferenzen, dadurch gekennzeichnet, daß das mobile Sende-/Empfangsgerät Steuersignale nach Maßgabe der Änderung des Betrages der Empfangsspannung des Empfangsgerätes aussendet und daß die Steuersignale in den synchronen oder quasisynchronen Gleichwellensendern die Differenz der Trägerfrequenzen steuern, derart, daß ein Feldstärkemaximum auf die Empfangsantenne des bewegten oder unbewegten mobilen Sende-/Empfangsgerätes fixiert wird.

2. Verfahren nach Anspruch 1, dadurch gekennzeichnet, daß die Steuersignale dauernd außerhalb des Nutzfrequenzbereichs ausgesendet werden (Fig. 2).

3. Verfahren nach Anspruch 1, dadurch gekennzeichnet, daß die Steuersignale pausengesteuert zu Beginn eines Gespräches oder in natürlichen Gesprächspausen ausgesendet werden, vorzugsweise im NF-Kanal (Fig. 2).

4. Verfahren nach Anspruch 1, dadurch gekennzeichnet, daß die Steuersignale digital codiert sind.

5. Verfahren nach Anspruch 1, dadurch gekennzeichnet, daß die Steuersignale analog moduliert sind.

6. Verfahren nach einem der vorherigen Ansprüche, gekennzeichnet durch seine Anwendung im Funkfeld eines Einzelsenders mit stehenden Funklöchern, welche durch Hindernisreflexionen o. ä. entstehen, wobei durch die Steuersignale des mobilen Sende-/Empfangsgerätes die Trägerphase des Einzelsenders geregelt wird und damit die Funklöcher um mindestens λ/4 verschoben werden.

7. Anordnung zur Durchführung des Verfahrens nach einem der vorherigen Ansprüche, dadurch gekennzeichnet, daß das mobile Sende-/Empfangsgerät ein Delta-Modulator-IC aufweist zur Abtastung des Feldstärkemaximums, dessen Ausgangsspannung in digitale oder analoge Steuersignale umgesetzt wird, die das mobile Sende-/Empfangsgerät aussendet, und daß mindestens einer von je zwei synchronen oder

quasisynchronen Gleichwellensendern einen Steuersignalauswerter aufweist, welcher den hochstabilen Trägerfrequenzoszillator des entsprechenden Gleichwellensenders in der Trägerfrequenz regelt, derart, daß ein Feldstärkemaximum auf die Empfangsantenne des mobilen Sende-/Empfangsgeräts fixiert wird (Fig. 5 bis 7).

## Claims

1. Method for the avoidance of interference disturbances in the radio transmission to a mobile transmit-receive equipment in the radio field of respective pairs of synchronous or quasi-synchronous continuous wave transmitters with two-wave interferences, characterised thereby, that the mobile transmit-receive equipment emits control signals in accordance with the change in the amount of the reception voltage of the receiving equipment and that the control signals control the difference in the carrier frequencies in the synchronous or quasi-synchronous continuous wave transmitters in such a manner that a field strength maximum is locked onto the receiving aerial of the moved or unmoved mobile transmit-receive equipment.

2. Method according to claim 1, characterised thereby, that the control signals are emitted continuously outside the useful frequency range (Fig. 2).

3. Method according to claim 1, characterised thereby, that the control signals are emitted pause-controlled at the start of a conversation or in natural speech pauses, preferably in the low frequency channel (Fig. 2).

4. Method according to claim 1, characterised thereby, that the control signals are digitally coded.

5. Method according to claim 1, characterised thereby, that the control signals are analog-modulated.

6. Method according to one of the preceding claims, characterised by its application in the radio field of a single transmitter with standing radio holes, which arise through obstacle reflections or similar, wherein the carrier phase of the single transmitter is regulated through the control signals of the mobile transmit-receive equipment and the radio holes are thereby displaced through at least λ/4.

7. Arrangement for the performance of the method according to one of the preceding claims, characterised thereby, that the mobile transmit-receive equipment displays a delta-modulator integrated circuit for the scanning of the field strength maximum, the output voltage of which is translated into digital or analog control signals which are emitted by the mobile transmit-receive equipment and that at least one of respective pairs of synchronous or quasi-synchronous continuous wave transmitters displays a control signal evaluator which regulates the highly stable carrier frequency oscillator of the corresponding continuous wave transmitter in carrier frequency in such a manner that a field strength maximum is locked onto the receiving aerial of the mobile transmit-receive equipment (Figs. 5 to 7).

## Revendications

1. Procédé pour éviter les perturbations par interférence dans la transmission radioélectrique à un poste émetteur-récepteur mobile dans le champ radio de chaque fois deux émetteurs sur fréquence commune synchrones ou quasi-synchrones avec des interférences de deux ondes, caractérisé en ce que le poste émetteur-récepteur mobile émet des signaux pilotes fonction du changement de la grandeur de la tension de réception de l'appareil récepteur et que les signaux pilotes commandent, dans les émetteurs sur fréquence commune synchrones ou quasi-synchrones, la différence des fréquences porteuses, de manière qu'un maximum d'intensité de champ soit fixée sur l'antenne réceptrice du poste émetteur-récepteur mobile en mouvement ou arrêté.

2. Procédé selon la revendication 1, caractérisé en ce que les singaux pilotes sont émis en dehors de la gamme des fréquences d'utilisation (figure 2).

3. Procédé selon la revendication 1, caractérisé en ce que les signaux pilotes sont émis, sous une commande par intervalles, au début d'une conversation ou pendant des pauses de conversation naturelles, de préférence dans le canal audiofréquence (figure 2).

4. Procédé selon la revendication 1, caractérisé en ce que les signaux pilotes sont codés numériques.

5. Procédé selon la revendication 1, caractérisé en ce que les signaux pilotes sont à modulation analogique.

6. Procédé selon l'une des revendications précédentes, caractérisé par son application au champ radioélectrique d'un émetteur individuel à trous radio stationnaires, créés par des réflexions sur des obstacles ou ayant des causes analogues, les signaux pilotes du poste émetteur-récepteur mobile réglant la phase porteuse de l'émetteur individuel et décalant ainsi les trous radio d'au moins λ/4.

7. Dispositif pour la mise en œuvre du procédé selon une des revendications précédentes, caractérisé en ce que le poste émetteur-récepteur mobile possède un circuit intégré modulateur delta pour l'exploration du maximum d'intensité de champ, dont la tension de sortie est convertie en signaux pilotes numériques ou analogiques, lesquels sont émis par le poste émetteur-récepteur mobile, et en ce que l'un au moins de chaque fois deux émetteurs sur fréquence commune synchrones ou quasi-synchrones possède un dispositif d'exploitation de signaux pilotes, lequel règle la fréquence porteuse de l'oscillateur générateur de fréquence porteuse de haute stabilité de l'émetteur considéré, de manière qu'un maximum d'intensité de champ soit fixé sur l'antenne réceptrice du poste émetteur-récepteur mobile (figures 5 à 7).

Betrag der
resultierenden
Feldstärke

2 — Maximum

$+V_F$    $-V_F$

Antenne

1

0 — Minimum    $\lambda/2$

$V_A$

W
S E

FIG.1

NF-Amplitude

NF-Übertragungsbereich

$\pm \Delta f_{St}$

$\pm \Delta a$

Tonfilter

300 Hz    $f_{St}$
pausengesteuert    3 kHz    $f_{St}$
dauernd    $f_{NF}$

FIG.2

NF - Amplitude

Sprachsignale

Sprachpause
$20ms \leq t_p \leq 50ms$

Anfangspause

$t$

0 1 0 1 0 1 1 0

$t$

digitales Steuersignal

$t$

sinusförmiges, frequenz- oder
amplitudenvariables
Steuersignal

FIG.3

FIG. 4a

FIG. 4b

FIG.5

FIG.6

**FIG. 7**